# EUROPÄISCHE PATENTSCHRIFT

(11) **EP 1 145 514 B1**
(45) Veröffentlichungstag und Bekanntmachung des Hinweises auf die Patenterteilung: **21.07.2004**
(21) Anmeldenummer: 99936316.1
(22) Anmeldetag: 26.05.1999
(51) Int. Cl.: H04L 25/06, H04B 10/18

(54) **VERFAHREN UND SCHALTUNGSANORDNUNG ZUM WIEDERHERSTELLEN EINES BINÄRSIGNALS**
METHOD AND CIRCUIT FOR RESTORING A BINARY SIGNAL
PROCEDE ET CIRCUIT POUR LA RECONSTITUTION D'UN SIGNAL BINAIRE

(30) Priorität: 27.05.1998 DE 19823705
(43) Veröffentlichungstag der Anmeldung: 17.10.2001
(73) Patentinhaber: SIEMENS AKTIENGESELLSCHAFT, 80333 München (DE)
(72) Erfinder: BOZENHARDT, Johannes, D-76275 Ettlingen (DE)
(86) Internationale Anmeldenummer: PCT/DE1999/001542
(87) Internationale Veröffentlichungsnummer: WO 1999/062200

(56) Entgegenhaltungen:
- DE-A- 3 816 973
- DE-A- 4 027 208
- DE-A- 4 435 101
- FR-A- 2 128 495
- FR-A- 2 691 311

## Beschreibung

Die Erfindung betrifft ein Verfahren und eine Schaltungsanordnung zum Wiederherstellen eines über eine optische Übertragungsstrecke übertragbaren Binärsignals aus einem verzerrten Binärsignal, wobei die optische Übertragungsstrecke eine Verzerrungszeit aufweist.

Gewöhnlich empfangen Zwischenverstärker in optischen Datenübertragungssystemen aufgrund von Dämpfungen innerhalb der Übertragungsstrecke Binärsignale zeitverzerrt. Das bedeutet, die verzerrten Binärsignale sind durch Signalveränderungen entweder über- oder untersteuert und die Low- oder High-Impulse sind entweder verlängert oder verkürzt. Diese Störungen muß der Zwischenverstärker entzerren, bevor dieser das Binärsignal an einen weiteren Zwischenverstärker oder Empfänger weiterleitet.

Das Binärsignal kann aus einem gestörten Binärsignal regeneriert werden, indem z. B. eine Startflanke des gestörten Binärsignals eine Abtastschaltung triggert, welche jeweils in "Bit-Mitte" den Pegel des Binärsignals abtastet. Dazu ist es allerdings erforderlich, daß die Abtastschaltung die Taktrate des Binärsignals genau kennt, wodurch diese mit einer aufwendigen Baudraten-Erkennungsschaltung oder mit einem Baudraten-Einstellschalter versehen sein muß. Durch die Abtastung des Binärsignals in der "Bit-Mitte" erhöhen sich darüber hinaus, insbesondere bei Binärsignalen mit niedrigen Baudraten, die Signal-Durchlaufzeiten in ausgedehnten Lichtwellenleiter-Systemen.

Aus der DE 38 16 973 ist eine Impulsbreitenstörkorrekturschaltung zur Wiederherstellung eines Signals bekannt, das durch eine Zeitdauer an seinem hohen Pegel verlängert wird.

Der vorliegenden Erfindung liegt die Aufgabe zugrunde, ein Verfahren der eingangs genannten Art zu vereinfachen. Darüber hinaus ist eine Schaltungsanordnung zur Durchführung des Verfahrens anzugeben.

Die Aufgabe wird im Hinblick auf das Verfahren durch die im kennzeichnenden Teil des Anspruchs 1 angegebenen, im Hinblick auf die Schaltungsanordnung durch die im kennzeichnenden Teil des Anspruchs 4 angegebenen Maßnahmen gelöst.

Vorteilhaft ist, daß zur Wiederherstellung des Binärsignals dessen Baudrate dem empfangenden Teilnehmer eines optischen Datenübertragungssystems nicht genau bekannt sein muß. Es ist lediglich erforderlich, im Teilnehmer Zeitintervalle einzustellen, die jeweils mindestens die zweifache Verzerrungszeit umfassen. Diese Verzerrungszeit ist aus technischen Datenblättern von Lichtwellenleiter-Übertragungsstrecken entnehmbar. Ferner ist die Taktrate des Binärsignals als ein ganzzahliges Vielfaches eines Zeitintervalls einzustellen, wodurch im Falle einer Zeitverzerrung (Verkürzung oder Verlängerung des Low- oder High-Pegels) der Pegel des gestörten Binärsignals nicht zu einem ganzzahligen Vielfachen eines Zeitintervalles und somit innerhalb eines Zeitintervalls wechselt. Dieses "Zeitstück", d. h. die Pegelhaltezeit innerhalb eines Zeitintervalls, welche anzeigt, wie lange der Pegel innerhalb eines Zeitintervalls unverändert bleibt, wird derart bewertet, daß in diesem Zeitintervall der vor oder nach dem Pegelwechsel gültige Pegel zur Wiederherstellung des Binärsignals gesetzt wird. Dabei ist vorgesehen, den in diesem Zeitintervall erfaßten Pegel nur dann zu übernehmen, wenn die Pegelhaltezeit einen vorgebbaren Wert erreicht.

In einem praktischen Ausführungsbeispiel der Erfindung sind die Zeitintervalle aufgrund der technischen Daten der Bauelemente und der maximal zulässigen Längen der Lichtwellenleiter zu jeweils ca. 83,33 ns festgelegt. Die Taktraten der über Lichtwellenleiter zu übertragenden Binärsignale betragen ein ganzzahliges Vielfaches dieses Zeitintervalls, im Beispiel sind Baudraten von 12 MB, 3 MB, 1,5 MB und 500 KB vorgesehen. Für den Fall, daß die Datentaktrate des Binärsignals mit 500 KB übertragen wird, umfaßt ein Signaldatenbit im störungsfreien Betrieb 24 Zeitintervalle zu jeweils 83,33 ns.

In einer Ausgestaltung der Erfindung wird die Verzerrungsart "verlängerter oder verkürzter Low- oder High-Impuls", welche in einer Identifikationsbetriebsart ermittelbar ist, zum Wiederherstellen des Binärsignals in den Zeitintervallen, in welchen Pegelwechsel erfolgten, zur Bewertung der Pegelhaltezeiten mitberücksichtigt. Die Verzerrungsart ist charakteristisch für eine Lichtwellenleiter-Übertragungsstrecke und ändert sich gewöhnlich nicht sprunghaft, sondern bleibt quasi konstant. Die Identifikationsbetriebsart wird vor der Übertragung von Nutzdaten eingestellt und es werden in dieser Betriebsart Testdaten übertragen, die sowohl in einem Sender als auch in einem Empfänger hinterlegt sind. Ein Vergleich der empfangenen mit den im Empfänger hinterlegten Testdaten ermöglicht einen Rückschluß auf die Art der Verzerrung.

In einer weiteren Ausgestaltung der Erfindung werden nach jedem Pegelwechsel die folgenden Zeitintervalle Zi synchronisiert, wodurch gewährleistet ist, daß diese Zeitintervalle während der Dauer der Wiederherstellung des Binärsignals konstant bleiben.

Anhand der Zeichnung, in der ein Ausführungsbeispiel der Erfindung veranschaulicht ist, werden im folgenden die Erfindung, deren Ausgestaltungen sowie Vorteile näher erläutert.

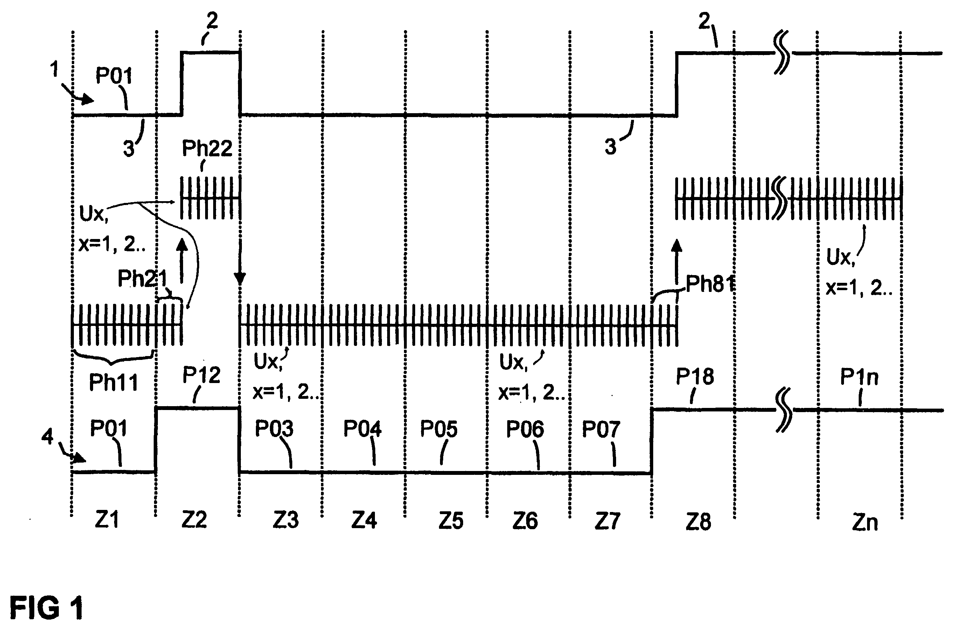

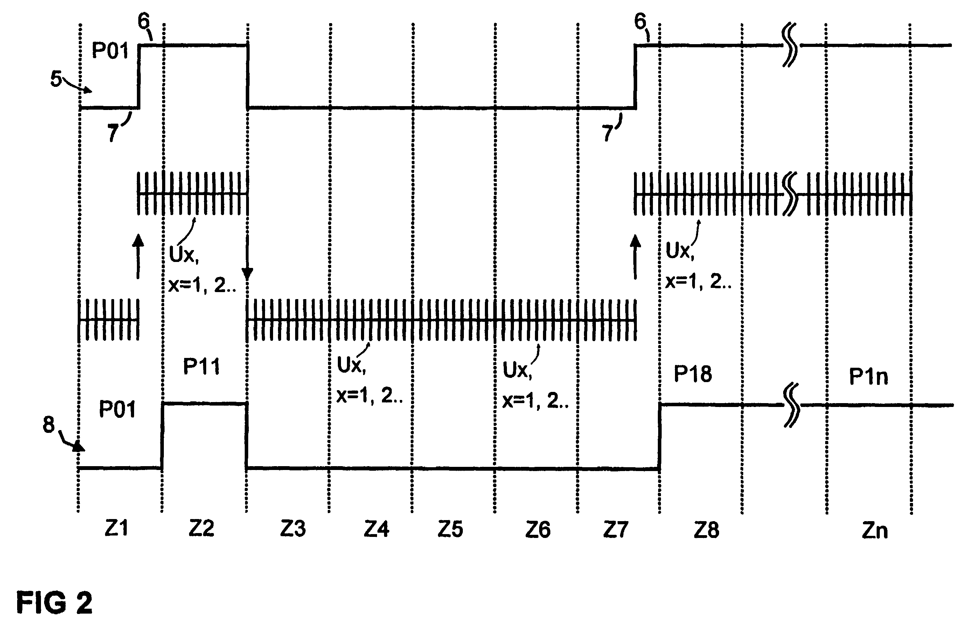

Es zeigen
- Figur 1 und 2: Zeitdiagramme eines gestörten und eines regenerierten Binärsignals.

In Figur 1 ist mit 1 ein gestörtes Binärsignal bezeichnet, welches während der Übertragung über eine mit Lichtwellenleitern versehene optische Übertragungsstrecke untersteuert ist und verkürzte High-Pegel 2 und verlängerte Low-Pegel 3 aufweist. Zur Be- und Auswertung des gestörten Binärsignals sind Zeitintervalle Z1, Z2, ... Zn mit jeweils einer Länge von 83,33 ns festgelegt, welche jeweils mindestens die zweifache Verzerrungszeit der optischen Übertragungsstrecke umfassen. Die Zeitintervalle Zi, i = 1, 2, ... n, sind im vorliegenden Beispiel jeweils in zehn Unterintervalle Ux, x = 1, 2, ... 10, unterteilt, was bedeutet, daß ein Unterintervall Ux 10 % eines Zeitintervalls Zi umfaßt. Die Taktrate des Binärsignals entspricht im vorliegenden Beispiel der Einfachheit halber der Länge des Zeitintervalls, was einer Baudrate von 12 MB entspricht.

Im folgenden ist angenommen, daß zur Wiederherstellung des Binärsignals ein erfaßter Pegel im gestörten Binärsignal 1 in einem Zeitintervall Zi nur dann für dieses Zeitintervall übernommen wird, falls die Pegelhaltezeit 30 % in diesem Zeitintervall überschreitet.

Im vorliegenden Beispiel liegt ein 0-Pegel P01 des gestörten Binärsignals 1 im gesamten Zeitintervall Z1 an. Die Pegelhaltezeit Ph11 von 30 % des Zeitintervalls Z1 ist überschritten, wodurch dieser 0-Pegel P01 für das Zeitintervall Z1 zur Wiederherstellung eines Binärsignals 4 übernommen wird. Im Zeitintervall Z2 wird ein Pegelwechsel von 0-Pegel auf 1-Pegel erfaßt, wobei eine Pegelhaltezeit Ph21 des 0-Pegels 30 % des Zeitintervalls Z2 und eine Pegelhaltezeit Ph22 des 1-Pegels 70 % des Zeitintervalls Z2 umfaßt. Für das gesamte Zeitintervall Z2 wird daher ein 1-Pegel P12 übernommen. Nach einem weiteren Pegelwechsel des gestörten Binärsignals 1 zu Beginn des Zeitintervalls Z3 von 1-Pegel auf 0-Pegel bleibt dieser 0-Pegel in den Zeitintervallen Z3 ... Z7 konstant und wechselt erst wieder nach einer Pegelhaltezeit Ph81, welche 30 % des Zeitintervalls Z8 umfaßt. Für die Zeitintervalle Z3 ... Z7 wird daher ein 0-Pegel P03 ... P07 zur Wiederherstellung des Binärsignals 4 übernommen, für das gesamte Zeitintervall Z8 dagegen ein 1-Pegel P18. Dieser 1-Pegel bleibt auch für die restlichen Zeitintervalle erhalten, das gesamte Binärsignal 4 ist somit wiederhergestellt und die Zeitverzerrungen sind eliminiert.

Im folgenden wird auf Figur 2 verwiesen, in der ein gestörtes Binärsignal 5 dargestellt ist, das während der Übertragung über einen Lichtwellenleiter übersteuert ist und verlängerte High-Pegel 6 und verkürzte Low-Pegel 7 aufweist. Die in den Figuren gleichen Teile sind mit gleichen Bezugszeichen versehen.

Es ist im folgenden wiederum angenommen, daß zur Wiederherstellung eines Binärsignals 8 ein erfaßter Pegel im gestörten Binärsignal 5 in einem Zeitintervall Zi nur dann für dieses Zeitintervall übernommen wird, falls die Pegelhaltezeit 30 % des Zeitintervalls überschreitet. Dies bedeutet im vorliegenden Fall, daß im gesamten Zeitintervall Z1 das wiederherzustellende Binärsignal 8 mit einem 0-Pegel P01 versehen wird, da zu 70 % des Zeitintervalls Z1 das gestörte Binärsignal 5 einen 0-Pegel aufweist. Entsprechend der beschriebenen Art und Weise wird im Zeitintervall Z2 ein 1-Pegel P11, in den Zeitintervallen Z3 ... Z7 ein 0-Pegel P02 ... P07 und in dem Zeitintervall Z8 und den folgenden Zeitintervallen ein 1-Pegel P18 ... P1n übernommen.

## Patentansprüche

1. Verfahren zum Wiederherstellen eines über eine optische Übertragungsstrecke übertragbaren Binärsignals (4, 8) aus einem verzerrten Binärsignal (1, 5), wobei die optische Übertragungsstrecke eine Verzerrungszeit aufweist, **gekennzeichnet durch** folgende Verfahrensschritte:
- Festlegen von Zeitintervallen (Z1, Z2, ...), die jeweils mindestens die zweifache Verzerrungszeit umfassen, wobei die Dauer von High- oder Low-Impulsen des Binärsignals (4, 8) ein ganzzahliges Vielfaches eines Zeitintervalls (Z1, Z2, ...) umfaßt,
- Erfassen von Pegelwechsel des verzerrten Binärsignals (1, 5) in den Zeitintervallen (Z1, Z2, ...),
- Ermitteln von Pegelhaltezeiten (Ph11, Ph21, Ph22, ...) des verzerrten Binärsignals (1, 5), welche jeweils anzeigen, wie lange ein Pegel innerhalb eines Zeitintervalls (Z1, Z2, ...) unverändert bleibt,
- Wiederherstellen des Binärsignals (4, 8) in den Zeitintervallen (Z1, Z2, ...)
- **durch** Übernahme der erfaßten Pegel in den Zeitintervallen (Z1, Z2, ...), in welchen im verzerrten Binärsignal (1, 5) keine Pegelwechsel erfolgt sind, und
- **durch** Übernahme der erfaßten Pegel in den Zeitintervallen (Z1, Z2, ...), in welchen Pegelwechsel erfolgt sind, nur dann, wenn die jeweiligen Pegelhaltezeiten (Ph11, Ph21, Ph22, ...) einen vorgebbaren Wert erreichen.

2. Verfahren nach Anspruch 1, **dadurch gekennzeichnet, daß** eine Verzerrungsart "verlängerter oder verkürzter Low- oder High-Impuls", welche in einer Identifikationsbetriebsart ermittelbar ist, zum Wiederherstellen des Binärsignals (4, 8) in den Zeitintervallen (Z1, Z2, ...), in welchen Pegelwechsel erfolgten, zur Bewertung der Pegelhaltezeiten (Ph11, Ph21, Ph22, ...) berücksichtigt wird.

3. Verfahren nach Anspruch 1 oder 2, **dadurch gekennzeichnet, daß** nach jedem Pegelwechsel die folgenden Zeitintervalle (Z1, Z2, ...) synchronisiert werden.

4. Schaltungsanordnung zur Durchführung des Verfahrens nach Anspruch 1,
**gekennzeichnet durch**:
- Mittel zum Festlegen von Zeitintervallen (Z1, Z2, ...), die jeweils mindestens die zweifache Verzerrungszeit umfassen, wobei die Dauer von High- oder Low-Impulsen des Binärsignals (4, 8) ein ganzzahliges Vielfaches eines Zeitintervalls (Z1, Z2, ...) umfaßt,
- Mittel zum Erfassen von Pegelwechsel des verzerrten Binärsignals (1, 5) in den Zeitintervallen (Z1, Z2, ...),
- Mittel zum Ermitteln von Pegelhaltezeiten (Ph11, Ph21, Ph22, ...) des verzerrten Binärsignals (1, 5), welche jeweils anzeigen, wie lange ein Pegel innerhalb eines Zeitintervalls (Z1, Z2, ...) unverändert bleibt,
- Mittel zum Wiederherstellen des Binärsignals (4, 8) in den Zeitintervallen (Z1, Z2, ...)
- **durch** Übernahme der erfaßten Pegel in den Zeitintervallen (Z1, Z2, ...), in welchen im verzerrten Binärsignal (1, 5) keine Pegelwechsel erfolgt sind, und
- **durch** Übernahme der erfaßten Pegel in den Zeitintervallen (Z1, Z2, ...), in welchen Pegelwechsel erfolgt sind, nur dann, wenn die jeweiligen Pegelhaltezeiten (Ph11, Ph21, Ph22, ...) einen vorgebbaren Wert erreichen.

5. Schaltungsanordnung nach Anspruch 4, **dadurch gekennzeichnet, daß** Mittel vorgesehen sind, welche eine Verzerrungsart "verlängerter oder verkürzter Low- oder High-Impuls", welche die Mittel in einer Identifikationsbetriebsart ermitteln, zum Wiederherstellen des Binärsignals (4, 8) in den Zeitintervallen (Z1, Z2, ...), in welchen Pegelwechsel erfolgten, zur Bewertung der Pegelhaltezeiten (Ph11, Ph21, Ph22, ...) berücksichtigen.

6. Schaltungsanordnung nach Anspruch 4 oder 5, **dadurch gekennzeichnet, daß** Mittel vorgesehen sind, welche nach jedem Pegelwechsel die folgenden Zeitintervalle (Z1, Z2, ...) synchronisieren.

## Claims

1. Method for restoring a binary signal (4, 8), which can be transmitted over an optical transmission link, from a distorted binary signal (1, 5), where the optical transmission link has a distortion time; **characterized by** the following procedural steps:
- Setting of time intervals (Z1, Z2, ...), each of these being at least twice the distortion time, and the duration of high or low impulses of the binary signal (4, 8) being an integer multiple of a time interval (Z1, Z2, ...),
- Recording of level changes in the distorted binary signal (1, 5) in the time intervals (Z1, Z2, ...),
- Determination of level hold times (Ph11, Ph21, Ph22, ...) for the distorted binary signal (1, 5), which respectively show how long a level remains unchanged within a time interval (Z1, Z2, ...),
- Restoration of the binary signal (4, 8) in the time intervals (Z1, Z2, ...),
- by take-over of the recorded levels in the time intervals (Z1, Z2, ...), in which no changes of level occurred in the distorted binary signal (1, 5), and
- by take-over of the recorded levels in the time intervals (Z1, Z2, ...) in which changes of level occurred, only if the respective level hold times (Ph11, Ph21, Ph22, ...) reach a presettable time.

2. Method according to Claim 1, **characterized in that** a type of distortion, "lengthened or shortened low or high impulse", which type can be determined in an identification operating mode, is taken into account in .the evaluation of the level hold times (Ph11, Ph21, Ph22, ...) for restoring the binary signal (4, 8) in the time intervals (Z1, Z2, ...) in which level changes occurred.

3. Method according to Claim 1 or 2, **characterized in that** after every change of level the subsequent time intervals (Z1, Z2, ...) are synchronized.

4. Circuit configuration for executing the method according to Claim 1, **characterized by**:
- Means for setting time intervals (Z1, Z2, ...), each of which are at least twice the distortion time, the duration of high or low impulses of the binary signal (4, 8) being an integer multiple of a time interval (Z1, Z2, ...),
- Means for recording level changes in the distorted binary signal (1, 5) in the time intervals (Z1, Z2, ...),
- Means for determining level hold times (Ph11, Ph21, Ph22, ...) for the distorted binary signal (1, 5), which respectively show how long a level remains unchanged within a time interval (Z1, Z2, ...),
- Means for restoring the binary signal (4, 8) in the time intervals (Z1, Z2, ...),
- by take-over of the recorded levels in the time intervals (Z1, Z2, ...), in which no changes of level occurred in the distorted binary signal (1, 5), and
- by take-over of the recorded levels in the time intervals (Z1, Z2, ...) in which changes of level occurred, only if the respective level hold times (Ph11, Ph21, Ph22, ...) reach a presettable time.

5. Circuit configuration according to Claim 4, **characterized in that** means are provided which take into account a type of distortion, "lengthened or shortened low or high impulse", which the means in an identification operating mode determine, in the evaluation of the level hold times (Ph11, Ph21, Ph22, ...) for restoring the binary signal (4, 8) in the time intervals (Z1, Z2, ...) in which level changes occurred.

6. Circuit configuration according to Claim 4 or 5, **characterized in that** means are provided which synchronize the subsequent time intervals (Z1, Z2, ...) after every change of level.

## Revendications

1. Procédé pour reconstituer à partir d'un signal binaire distordu (1, 5) un signal binaire (4, 8) pouvant être transmis par l'intermédiaire d'une voie de transmission optique, la voie de transmission optique comportant un temps de distorsion,
**caractérisé par** les étapes suivantes :
- spécification d'intervalles de temps (Z1, Z2, ...) qui comprennent chacun au moins le double du temps de distorsion, la durée des impulsions hautes ou basses du signal binaire (4, 8) comprenant un multiple entier d'un intervalle de temps (Z1, Z2, ...),
- détection de changements de niveau du signal binaire distordu (1, 5) dans les intervalles de temps (Z1, Z2, ...),
- détermination de temps de maintien de niveau (Ph11, Ph21, Ph22, ...) du signal binaire distordu (1, 5), lesquels temps indiquent à chaque fois pendant combien de temps un niveau reste inchangé à l'intérieur d'un intervalle de temps (Z1, Z2, ...),
- reconstitution du signal binaire (4, 8) dans les intervalles de temps (Z1, Z2, ...)
- par reprise des niveaux détectés dans les intervalles de temps (Z1, Z2, ...) dans lesquels aucun changement de niveau n'a eu lieu dans le signal binaire distordu (1, 5), et
- par reprise des niveaux détectés dans les intervalles de temps (Z1, Z2, ...) dans lesquels un changement de niveau a eu lieu seulement si les temps de maintien de niveau (Ph11, Ph21, Ph22, ...) respectifs atteignent une valeur pouvant être prédéterminée.

2. Procédé selon la revendication 1, **caractérisé par le fait qu'**un type de distorsion "impulsion basse ou haute prolongée ou raccourcie" qui peut être déterminé dans un mode de fonctionnement d'identification est pris en compte pour l'évaluation des temps de maintien de niveau (Ph11, Ph21, Ph22, ...) en vue de la reconstitution du signal binaire (4, 8) dans les intervalles de temps (Z1, Z2, ...) dans lesquels des changements de niveau ont eu lieu.

3. Procédé selon la revendication 1 ou 2, **caractérisé par le fait que**, après chaque changement de niveau, les intervalles de temps suivants (Z1, Z2, ...) sont synchronisés.

4. Circuit pour la mise en oeuvre du procédé selon la revendication 1,
**caractérisé par** :
- des moyens pour spécifier des intervalles de temps (Z1, Z2, ...) qui comprennent chacun au moins le double du temps de distorsion, la durée des impulsions hautes ou basses du signal binaire (4, 8) comprenant un multiple entier d'un intervalle de temps (Z1, Z2, ...),
- des moyens pour détecter des changements de niveau du signal binaire distordu (1, 5) dans les intervalles de temps (Z1, Z2, ...),
- des moyens pour déterminer des temps de maintien de niveau (Ph11, Ph21, Ph22, ...) du signal binaire distordu (1, 5), lesquels temps indiquent à chaque fois pendant combien de temps un niveau reste inchangé à l'intérieur d'un intervalle de temps (Z1, Z2, ...),
- des moyens pour reconstituer le signal binaire (4, 8) dans les intervalles de temps (Z1, Z2, ...)
- par reprise des niveaux détectés dans les intervalles de temps (Z1, Z2, ...) dans lesquels aucun changement de niveau n'a eu lieu dans le signal binaire distordu (1, 5), et
- par reprise des niveaux détectés dans les intervalles de temps (Z1, Z2, ...) dans lesquels un changement de niveau a eu lieu seulement si les temps de maintien de niveau (Ph11, Ph21, Ph22, ...) respectifs atteignent une valeur pouvant être prédéterminée.

5. Circuit selon la revendication 4, **caractérisé par le fait qu'**il est prévu des moyens qui prennent en compte le type de distorsion "impulsion basse ou haute prolongée ou raccourcie", que les moyens déterminent dans un mode de fonctionnement d'identification, pour l'évaluation des temps de maintien de niveau (Ph11, Ph21, Ph22, ...) en vue de la reconstitution du signal binaire (4, 8) dans les intervalles de temps (Z1, Z2, ...) dans lesquels des changements de niveau ont eu lieu.

6. Circuit selon la revendication 4 ou 5, **caractérisé par le fait qu'**il est prévu des moyens qui, après chaque changement de niveau, synchronisent les intervalles de temps suivants (Z1, Z2, ...).
